# EUROPEAN PATENT APPLICATION

(11) **EP 3 276 066 A1**
(43) Date of publication of application: **31.01.2018**
(21) Application number: 16771330.4
(22) Date of filing: 25.03.2016
(51) Int. Cl.: D06F 33/02

(54) **WASHING MACHINE CONTROL METHOD AND WASHING MACHINE**

(30) Priority: 27.03.2015 CN 201510140737
(71) Applicant: Qingdao Haier Drum Washing Machine Co., Ltd., Qingdao, Shandong 266101 (CN)
(72) Inventor: CHI, Zongrui, Qingdao Shandong 266101 (CN); WANG, Limei, Qingdao Shandong 266101 (CN); LI, Zuoqiang, Qingdao Shandong 266101 (CN)
(74) Representative: Bertsch, Florian Oliver
(86) International application number: PCT/CN2016/077389
(87) International publication number: WO 2016/155575

(57) **Abstract**

A control method of washing machine and a washing machine adopting the control method are provided. The washing machine includes a master control board, and an acceleration sensor (2) configured to detect vibration of an outer drum (1). At least in a high-speed dewatering phase, the master control board is configured to determine whether to perform load redistribution according to vibration data, detected by the acceleration sensor (2), regarding the outer drum (1), and issue an instruction. Since the washing machine determines whether to perform load redistribution according to vibration data, detected by the acceleration sensor (2), regarding the outer drum (1) in the high-speed dewatering phase, various uncontrolled vibrations and displacements can be restrained in advance, thereby increasing operational reliability of the washing machine, avoiding generating a collision of the drum and increasing washing efficiency and service life of the washing machine.

## Description

### TECHNICAL FIELD

The present disclosure relates to the washing equipment technology, for example, relates to a control method of a washing machine and a washing machine adopting the control method.

### BACKGROUND

In a low-speed operation phase of a washing machine, collision of a drum sometimes occurs due to load imbalance in an inner drum. With regard to such situation, an eccentric detection method is generally adopted in the washing machine. However, the eccentric detection method has low precision and poor reliability, and sometimes fails to perform the detection in time, leading to various problems, such as a delay, noise, vibrations, displacement of the entire machine and the like.

When a dewatering process is performed in the washing machine, an eccentric detection is generally performed in a low-speed phase firstly. If loads are distributed uniformly in the inner drum and the eccentric value is small, a rotating speed is gradually increased. However, with the increase of the rotating speed, water in the loads becomes less. Accordingly, a distribution state of the loads in the inner drum is changed uncertainly, and thus, the noises, the vibrations, the displacement of the entire machine and the like are easily caused. Moreover, besides the increase of the rotating speed, resonance generated by mechanical configurations such as an electrical device, a housing and the like may also lead to the noise, the vibrations and the displacement of the entire machine. If this state is not corrected in time, a strong vibration would arise in the dewatering phase, leading to the noise and even the displacement of the entire machine.

Currently, in a high-speed dewatering state of the washing machine, the eccentric detection process is performed by the washing machine only if the collusion of the drum, or the strong vibration and the displacement of the entire machine occur, so as to reduce the rotating speed of the washing machine and redistribute the loads. Then, the eccentric detection is performed again, and the high-speed operation is restarted. However, as for a small vibration which is generally uncontrollable, no eccentric detection process is provided in the procedure, and small vibration is ignored (since the eccentric detection is not accurate at high rotating speed). If a gap between an outer drum and the housing is decreased, the outer drum may also collide with a box body due to the small vibration, causing the noise, the vibration, displacement of the entire machine and the like in the washing machine. A common treatment method is to perform the eccentric detection process only after the rotating speed of a motor is reduced, which apparently fails to meet requirements.

At present, a three-dimensional displacement type vibration sensor is adopted by some washing machines, and configured to detect a displacement of the vibration through a Hall effect. However, the delay in detection and collision of the drum sometimes occur for the displacement type vibration sensor. As a result, the data of the displacement type sensor is fed back after the vibration and displacement of the entire machine have occurred. That is to say, the measured data fails to be used to control the vibrations.

In view of the above problems, a new control method of a washing machine is urgently needed to be provided to solve problems of the washing machine in a high-speed dewatering phase, such as high noise, large vibration of the entire machine, collision of the drum and the like.

### SUMMARY

Embodiments of the present disclosure propose a control method of a washing machine, through which the washing machine is capable of reliably operating and avoiding collision of a drum in a high-speed dewatering phase.

Embodiments of the present disclosure further propose a washing machine capable of reliably operating and avoiding collision of a drum in a high-speed dewatering phase.

In an aspect, embodiments of the present disclosure provide a control method of a washing machine. The washing machine includes a master control board, and an acceleration sensor configured to detect vibration of an outer drum. The master control board is configured to, at least in a high-speed dewatering phase, determine whether to perform load redistribution according to vibration data, detected by the acceleration sensor, regarding the outer drum, and issue an instruction.

The acceleration sensor is configured to output the vibration data in three directions of orthogonal X axis, Y axis and Z axis of the outer drum to the master control board of the washing machine. The master control board is configured to determine a vibration level of the outer drum according to the received vibration data. The master control board controls the washing machine to perform load redistribution when the vibration level is greater than the preset level threshold.

A dewatering phase of the washing machine has a low-speed operation phase and the high-speed dewatering phase. In the low-speed operation phase and a washing and/or rinsing phase of the washing machine, the washing machine adopts an eccentric detection method to determine whether to perform load redistribution.

The control method may include the following steps:
step A1, in the washing machine, executing a dewatering process to enter the low-speed operation phase;
step B1, in the washing machine, determining whether an eccentric value of the outer drum (1) detected by the eccentric detection method is greater than a preset eccentric value; if the eccentric value of the outer drum (1) is greater than the preset eccentric value, step D1 is executed, otherwise, step C1 is executed;
step C1, through the master control board, obtaining a current vibration level of the outer drum (1) according to the vibration data, detected by the acceleration sensor (2), regarding the outer drum, and determining whether the current vibration level is greater than a preset level threshold; if the current vibration level is greater than the preset level threshold, step D1 is executed, otherwise, step E1 is executed;
step D1, through the washing machine, performing load redistribution;
step E1, through the washing machine, entering the high-speed dewatering phase to perform high-speed dewatering, and starting to time;
step F1, determining whether timekeeping time reaches or exceeds a preset dewatering time; if the timekeeping time reaches or exceeds the preset dewatering time, dewatering is ended, otherwise, step G1 is executed; and
step G1, through the master control board, obtaining the current vibration level of the outer drum (1) according to the vibration data, detected by the acceleration sensor (2), regarding the outer drum, and determining whether the current vibration level is greater than the preset level threshold; if the current vibration level is greater than the preset level threshold, proceeding to step F1 after load redistribution is performed, otherwise, proceeding to step F1 directly.

The control method proceeds to step B1 after load redistribution is performed by the washing machine in step D1.

An alarm is issued from the washing machine when a total number and/or accumulative time of the load redistribution performed by the washing machine exceeds a preset value.

The control method may include the following steps:
step A2, in the washing machine, executing a washing/rinsing process and starting to time;
step B2, determining whether timekeeping time reaches or exceeds a preset washing/rinsing time; if the timekeeping time reaches or exceeds the preset washing/rinsing time, washing/rinsing is ended, otherwise step C2 is executed;
step C2, in the washing machine, determining whether an eccentric value of the outer drum (1) detected by the eccentric detection method is greater than the preset eccentric value; if the eccentric value of the outer drum is greater than the preset eccentric value, step E2 is executed, otherwise, step D2 is executed;
step D2, through the master control board, obtaining the current vibration level of the outer drum (1) according to the vibration data, detected by the acceleration sensor (2), regarding the outer drum, and determining whether the current vibration level is greater than the preset level threshold; if the current vibration level is greater than the preset level threshold, step E2 is executed, otherwise proceeding to step B2 directly; and
step E2, proceeding to step B2 after load redistribution is performed through the washing machine.

In another aspect, embodiments of the present disclosure provide a washing machine. The washing machine includes an acceleration sensor configured to detect vibration of an outer drum, and the washing machine is operated according to the above control method of the washing machine.

The washing machine may be a drum washing machine. The acceleration sensor is arranged on an outer circumferential wall of the outer drum and is located at a front part of the outer drum.

The washing machine may be an impeller washing machine. An acceleration sensor can be arranged on a circumferential part or a bottom of the outer drum, or arranged on a hanger rod of the washing machine.

Embodiments of the present disclosure have beneficial effects described below.

According to the control method of the washing machine provided by embodiments of the present disclosure, in the high-speed dewatering phase, it is determined whether to perform load redistribution according to the vibration data, detected by the acceleration sensor, regarding the outer drum, and an instruction is issued. The acceleration sensor can reflect vibration conditions of the outer drum more sensitively, and execute restraint on various uncontrolled vibrations and displacements in advance, thereby increasing operational reliability of the washing machine, avoiding generating collision of the drum and increasing washing efficiency and service life of the washing machine.

Since the washing machine provided by embodiments of the present disclosure adopts the above control method, operation is more reliable, thereby effectively avoiding collision of the drum and realizing high washing efficiency and long service life.

### BRIEF DESCRIPTION OF DRAWINGS

FIG. 1 is a schematic diagram illustrating an installation position of an acceleration sensor provided by embodiment I of the present disclosure;
FIG. 2 is a flow chart I illustrating a dewatering control method of a washing machine provided by embodiment I of the present disclosure; and
FIG. 3 is a flow chart II illustrating a dewatering control method of a washing machine provided by embodiment I of the present disclosure.

In the drawings, reference numeral 1 indicates an outer drum, and reference numeral 2 indicates an acceleration sensor.

### DETAILED DESCRIPTION

Embodiments of the present disclosure will be described below with reference to the drawings.

Embodiments of the present disclosure provide a control method of a washing machine. The washing machine includes a master control board, and an acceleration sensor configured to detect vibration of an outer drum. The master control board is configured to, at least in a high-speed dewatering phase, determine whether to perform load redistribution according to vibration data, detected by the acceleration sensor, regarding the outer drum, and issue an instruction. The acceleration sensor can reflect vibration conditions of the outer drum more sensitively, and restrain various uncontrolled vibrations and displacements in advance, thereby increasing operational reliability of the washing machine, avoiding the collision of the drum and increasing washing efficiency and service life of the washing machine.

### Embodiment I

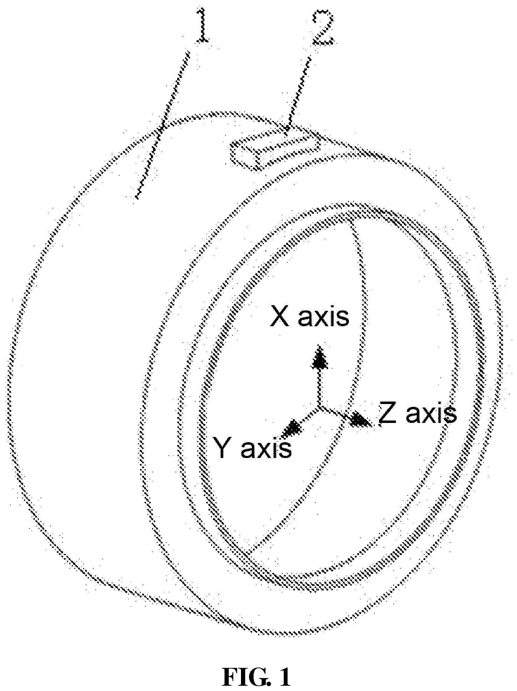

The present embodiment provides a drum washing machine and a control method thereof. The drum washing machine includes a master control board, and an acceleration sensor connected with the master control board and configured to detect vibration of an outer drum. The position of the acceleration sensor shall satisfy such a requirement that the vibration of the outer drum can be effectively detected. In consideration of installation convenience and wiring convenience, in the present embodiment, the acceleration sensor 2 is arranged on an outer circumferential wall of the outer drum 1 and is located at a front part of the outer drum 1, and can vibrate together with the outer drum 1, as shown in FIG. 1. In addition, the acceleration sensor 2 does not contact a box body of the washing machine and other components of the washing machine.

The acceleration sensor 2 may output vibration data of the outer drum in three directions of orthogonal X axis, Y axis and Z axis to the master control board. In the present embodiment, a horizontal left-right direction indicates Y axis, an up-down direction indicates X axis and a horizontal front-rear direction indicates Z axis.

In the dewatering process performed in the washing machine, the eccentric detection is not accurate in the high-speed dewatering phase. Therefore, in the high-speed dewatering phase, the master control board determines whether to perform load redistribution according to vibration data, detected by the acceleration sensor 2, regarding the outer drum, and issues an instruction. On the contrary, in the low-speed operation phase, detection results obtained through individually adopting the eccentric detection method and individually adopting the acceleration sensor are very similar. However, through the acceleration sensor 2, the vibration data can be obtained in real time and fed back to the master control board, thus vibration is detected more accurately. Therefore, a control method combining the above two detection methods can be adopted in the low-speed operation phase.

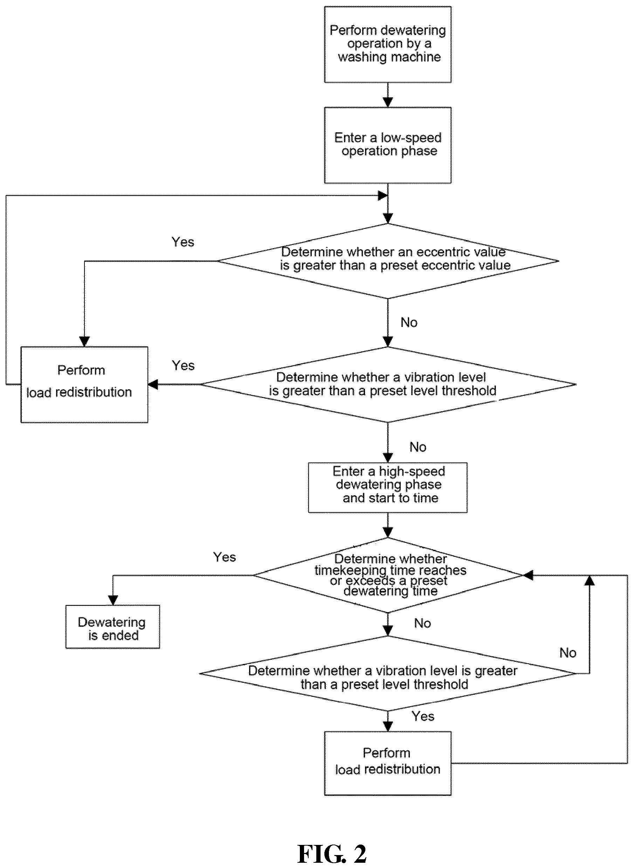

As shown in FIG. 2, the control method of the washing machine includes steps described below.

In step A1, the washing machine executes a dewatering process, and enters a low-speed operation phase.

In step B1, the master control board determines whether an eccentric value, detected by the eccentric detection method, of the outer drum 1 is greater than a preset eccentric value. If the eccentric value is greater than the preset eccentric value, the process proceeds to step D. Otherwise, the process proceeds to step C.

A reference data table of the vibration data and vibration levels as well as a preset level threshold are stored in the master control board. In step C1, the master control board determines a current vibration level of the outer drum 1 according to the vibration data in three directions of X axis, Y axis and Z axis detected by the acceleration sensor 2, and determines whether the current vibration level is greater than the preset level threshold. If current vibration level is greater than the preset level threshold, the process proceeds to step D1. Otherwise, the process proceeds to step E1.

In step D1, the washing machine performs load redistribution, and then the process proceeds to step B1.

In step E1, the washing machine enters a high-speed dewatering phase to perform high-speed dewatering, and starts to time.

In step F1, it is determined whether timekeeping time reaches or exceeds a preset dewatering time. If the timekeeping time reaches or exceeds the preset dewatering time, dewatering is ended. Otherwise, the process proceeds to step G1.

In step G1, the master control board obtains a current vibration level of the outer drum 1 according to the vibration data in three directions of X axis, Y axis and Z axis detected by the acceleration sensor 2, and determines whether the current vibration level is greater than the preset level threshold. If the current vibration level is greater than the preset level threshold, the process proceeds to step F1 after the load redistribution is performed. Otherwise, the process proceeds to step F1 directly.

The method for determining the current vibration level of the outer drum 1 according to the received vibration data in three directions of X axis, Y axis and Z axis in step C is not limited. For example, the vibration level may be determined by obtaining the maximum value of the vibration data in three directions and inquiring the reference data table, or by obtaining an average value of the vibration data in three directions and inquiring the reference data table, or by having a modulus value which is a sum of vectors in three directions as the vibration data and inquiring the reference data table, and the like.

Through the control method of the present embodiment, in the case that a gap between the outer drum 1 and a housing of the drum washing machine is reduced, better control for various noises, vibration and displacement of the entire machine can be realized. Once the vibration, the noises and the displacement appear, the acceleration sensor 2 installed on the front part of the outer drum 1 can detect a vibration condition of the outer drum 1 and output a corresponding signal to the master control board. The master control board determines based on the received signal and performs corresponding treatment in advance, thereby preventing the noises, the vibration and the displacement of the entire machine and the like from occurring in the washing machine.

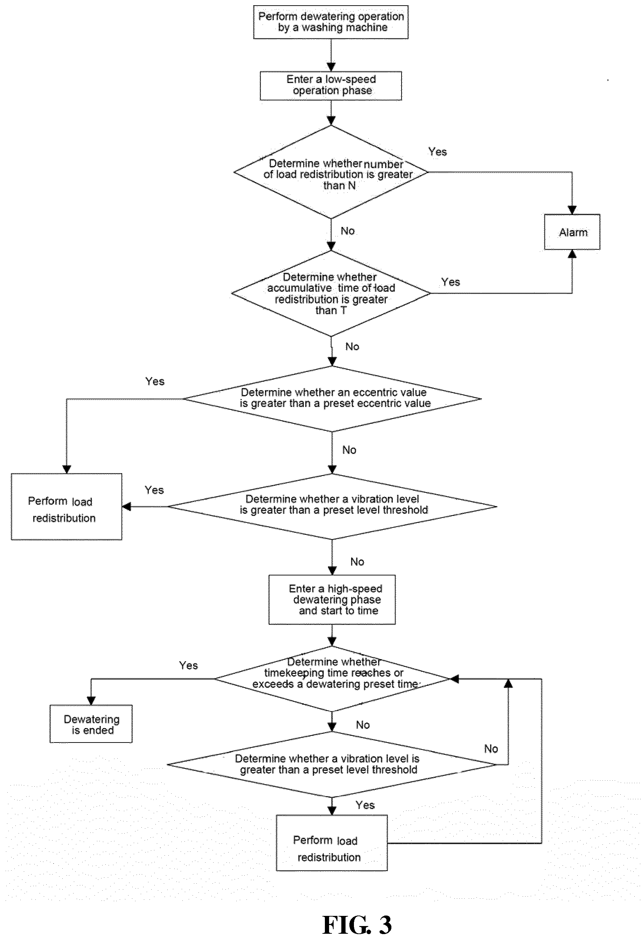

After the number and/or accumulative time of the load redistribution performed by the washing machine exceeds the preset value, the washing machine may issue an alarm. For example, as shown in FIG. 3, the method includes steps described below.

In step A1, the washing machine executes a dewatering process, and enters a low-speed operation phase.

In step b1, it is determined whether the number of load redistribution is greater than N. If the number of load redistribution is greater than N, an alarm is issued. Otherwise, the process proceeds to step b2.

In step b2, it is determined whether accumulative time of load redistribution is greater than T. If the accumulative time is greater than T, an alarm is issued. Otherwise, the process proceeds to step B1.

In step B1, the master control board determines whether an eccentric value of the outer drum 1 detected through the eccentric detection method is greater than a preset eccentric value. If the eccentric value is greater than the preset eccentric value, the process proceeds to step D1. Otherwise, the process proceeds to step C1.

A corresponding reference data table of the vibration data of the outer drum and vibration levels as well as a preset level threshold are stored in the master control board. In step C1, the master control board determines a current vibration level of the outer drum 1 according to the received vibration data in three directions of X axis, Y axis and Z axis, and determines whether the current vibration level is greater than the preset level threshold. If current vibration level is greater than the preset level threshold, the process proceeds to step D1. Otherwise, the process proceeds to step E1.

In step D1, the washing machine performs load redistribution, and then the process proceeds to step B1.

In step E1, the washing machine enters a high-speed dewatering phase to perform high-speed dewatering, and starts to time.

In step F1, it is determined whether high-speed dewatering time reaches or exceeds a preset dewatering time. If the high-speed dewatering time reaches or exceeds the preset dewatering time, dewatering is ended. Otherwise, the process proceeds to step G1.

In step G1, the master control board obtains a current vibration level of the outer drum 1 according to the vibration data, detected by the acceleration sensor 2, in three directions of X axis, Y axis and Z axis, and determines whether the current vibration level is greater than the preset level threshold. If the current vibration level is greater than the preset level threshold, the process proceeds to step F1 after load redistribution is performed. Otherwise, the process proceeds to step F1 directly.

In the washing/rinsing phase, the washing machine may also adopt a control method in which the eccentric detection method and the detection utilizing the acceleration sensor are combined. The control method may include steps described below.

In step A2, the washing machine executes a washing/rinsing process, and starts to time.

In step B2, it is determined whether timekeeping time reaches or exceeds a preset washing/rinsing time. If the timekeeping time reaches or exceeds the preset washing/rinsing time, washing/rinsing is ended. Otherwise, the process proceeds to step C2.

In step C2, the washing machine determines whether a detected eccentric value of the outer drum 1 is greater than a preset eccentric value. If the detected eccentric value of the outer drum 1 is greater than the preset eccentric value, the process proceeds to step E2. Otherwise, the process proceeds to step D2.

In step D2, the master control board obtains a current vibration level of the outer drum 1 according to the vibration data, detected by the acceleration sensor 2, of the outer drum, and determines whether the current vibration level is greater than the preset level threshold. If the current vibration level is greater than the preset level threshold, the process proceeds to step E2. Otherwise, the process proceeds to step B2 directly.

In step E2, the process proceeds to step B2 after the load redistribution is performed by the washing machine.

### Embodiment II

The present embodiment provides an impeller washing machine and a control method thereof. The impeller washing machine includes a master control board, and an acceleration sensor connected with the master control board and configured to detect vibration of an outer drum. The acceleration sensor is arranged on a circumferential part or a bottom of the outer drum, or arranged on a hanger rod of the washing machine. In the dewatering process executed by the washing machine, eccentric detection is not accurate in the high-speed dewatering phase. Therefore, in the high-speed dewatering phase, the master control board determines whether to perform load redistribution according to vibration data, detected by the acceleration sensor, regarding the outer drum, and issues an instruction.

The control method of the impeller washing machine in the present embodiment is similar to that of embodiment I, and is not repeated herein.

Technical solutions of the present disclosure are described above in combination with embodiments. These descriptions are not interpreted as limitations to a protection scope of the present disclosure . Based on explanation herein, those skilled in the art can contemplate other embodiments of the present disclosure without contributing creative labor. These embodiments shall fall into the protection scope of the present disclosure.

### INDUSTRIAL APPLICABILITY

The present disclosure provides a control method for a washing machine and a washing machine adopting the control method. The washing machine includes a master control board and an acceleration sensor configured to detect vibration of an outer drum. At least in the high-speed dewatering phase, the master control board determines whether to perform load redistribution according to vibration data, detected by the acceleration sensor, regarding the outer drum, and issues an instruction. Since the washing machine determines whether to perform load redistribution according to vibration data, detected by the acceleration sensor, regarding the outer drum in the high-speed dewatering phase, various uncontrolled vibrations and displacements can be restrained in advance, thereby increasing operational reliability of the washing machine, avoiding generating collision of the drum and increasing washing efficiency and service life of the washing machine.

## Claims

1. A control method of a washing machine, wherein the washing machine comprises a master control board, and an acceleration sensor (2) configured to detect vibration of an outer drum (1), wherein the master control board is configured to, at least in a high-speed dewatering phase, determine whether to perform load redistribution according to vibration data, detected by the acceleration sensor (2), regarding the outer drum, and issue an instruction.

2. The control method according to claim 1, wherein the acceleration sensor (2) is configured to output vibration data in three directions of orthogonal X axis, Y axis and Z axis of the outer drum to the master control board, and the master control board is configured to determine a vibration level of the outer drum (1) according to the vibration data received from the acceleration sensor, wherein the washing machine is controlled by the master control board to perform load redistribution when the vibration level is greater than a preset level threshold.

3. The control method according to claim 2, wherein a dewatering phase of the washing machine has a low-speed operation phase and the high-speed dewatering phase, in the low-speed operation phase and a washing and/or rinsing phase of the washing machine, an eccentric detection method is adopted by the washing machine to determine whether to perform load redistribution.

4. The control method according to claim 3, comprising:
step A1, in the washing machine, executing a dewatering process to enter the low-speed operation phase;
step B1, in the washing machine, determining whether an eccentric value of the outer drum (1) detected by the eccentric detection method is greater than a preset eccentric value; if the eccentric value of the outer drum (1) is greater than the preset eccentric value, step D1 is executed, otherwise, step C1 is executed;
step C1, through the master control board, obtaining a current vibration level of the outer drum (1) according to the vibration data, detected by the acceleration sensor (2), regarding the outer drum, and determining whether the current vibration level is greater than a preset level threshold; if the current vibration level is greater than the preset level threshold, step D1 is executed, otherwise, step E1 is executed;
step D1, in the washing machine, performing load redistribution;
step E1, in the washing machine, entering the high-speed dewatering phase to perform high-speed dewatering, and starting to time;
step F1, determining whether timekeeping time reaches or exceeds a preset dewatering time; if the timekeeping time reaches or exceeds the preset dewatering time, dewatering is ended, otherwise, step G1 is executed; and
step G1, through the master control board, obtaining the current vibration level of the outer drum (1) according to the vibration data, detected by the acceleration sensor (2), regarding the outer drum, and determining whether the current vibration level is greater than the preset level threshold; if the current vibration level is greater than the preset level threshold, the dewatering process proceeds to step F1 after load redistribution is performed, otherwise, the dewatering process proceeds to step F1 directly.

5. The method according to claim 4, wherein the control method proceeds to step B1 after load redistribution is performed by the washing machine in step D1.

6. The control method according to claim 4, wherein an alarm is issued from the washing machine when a total number and/or accumulative time of the load redistribution performed by the washing machine exceeds a preset value.

7. The control method according to any one of claims 3-6, comprising:
step A2, in the washing machine, executing a washing/rinsing process and starting to time;
step B2, determining whether timekeeping time reaches or exceeds a preset washing/rinsing time; if the timekeeping time reaches or exceeds the preset washing/rinsing time, washing/rinsing is ended, otherwise step C2 is executed;
step C2, in the washing machine, determining whether an eccentric value of the outer drum (1) detected by the eccentric detection method is greater than the preset eccentric value; if the eccentric value of the outer drum is greater than the preset eccentric value, step E2 is executed, otherwise, step D2 is executed;
step D2, through the master control board, obtaining the current vibration level of the outer drum (1) according to the vibration data, detected by the acceleration sensor (2), regarding the outer drum, and determining whether the current vibration level is greater than the preset level threshold; if the current vibration level is greater than the preset level threshold, step E2 is executed, otherwise proceeding to step B2 directly; and
step E2, proceeding to step B2 after load redistribution is performed in the washing machine.

8. A washing machine comprising an acceleration sensor (2) configured to detect vibration of an outer drum (1), wherein the washing machine adopts the control method of any one of claims 1-7.

9. The washing machine according to claim 8, wherein the washing machine is a drum washing machine, and the acceleration sensor (2) is arranged on an outer circumferential wall of the outer drum (1) and is located at a front part of the outer drum (1).

10. The washing machine according to claim 8, wherein the washing machine is an impeller washing machine, and the acceleration sensor (2) is arranged on a circumferential part or a bottom of the outer drum, or arranged on a hanger rod of the washing machine.
